(19) Europäisches Patentamt / European Patent Office / Office européen des brevets

(11) **EP 4 294 066 B1**

(12) **EUROPEAN PATENT SPECIFICATION**

(45) Date of publication and mention
of the grant of the patent:
**03.12.2025 Bulletin 2025/49**

(21) Application number: **22770459.0**

(22) Date of filing: **14.03.2022**

(51) International Patent Classification (IPC):
$H04W\ 12/06$ (2021.01)    $H04L\ 9/40$ (2022.01)
$H04W\ 12/63$ (2021.01)    $H04W\ 12/79$ (2021.01)
$H04W\ 84/12$ (2009.01)    $H04W\ 24/08$ (2009.01)

(52) Cooperative Patent Classification (CPC):
**H04W 12/63; H04L 63/08; H04W 12/06;**
**H04W 12/79;** H04W 24/08; H04W 84/12

(86) International application number:
**PCT/CN2022/080716**

(87) International publication number:
**WO 2022/194104 (22.09.2022 Gazette 2022/38)**

(54) **METHOD FOR DETERMINING WHETHER ELECTRONIC DEVICE REQUIRES RE-AUTHENTICATION, AND ELECTRONIC DEVICE**

VERFAHREN ZUR BESTIMMUNG, OB EINE ELEKTRONISCHE VORRICHTUNG EINE NEUAUTHENTIFIZIERUNG ERFORDERT, UND ELEKTRONISCHE VORRICHTUNG

PROCÉDÉ POUR DÉTERMINER SI UN DISPOSITIF ÉLECTRONIQUE NÉCESSITE UNE NOUVELLE AUTHENTIFICATION ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2021 CN 202110295867**

(43) Date of publication of application:
**20.12.2023 Bulletin 2023/51**

(73) Proprietor: **Huawei Technologies Co., Ltd.**
**Shenzhen, Guangdong 518129 (CN)**

(72) Inventor: **TAO, Yu**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
CN-A- 108 540 926    CN-A- 111 669 753
US-A1- 2014 282 868    US-A1- 2015 288 688
US-A1- 2016 205 094    US-A1- 2016 373 422

## Description

### TECHNICAL FIELD

This application relates to the field of communication technologies, and in particular, to a method for determining whether an electronic device needs to be re-authenticated, and an electronic device.

### BACKGROUND

Currently, smart home includes many electronic devices, such as a smart television (for example, a smart screen), a smart sound box, a smart light, and a smart air conditioner. These electronic devices may store personal information, personal privacy, or the like of a user. The user does not want others to obtain the information. However, after the electronic device is damaged or stolen, the information of the user may be stolen by an unauthorized user. For example, when the smart television or the smart sound box is stolen, another person may obtain the personal information. For another example, usually, a damaged smart television may be returned for repair or sold as a waste. In this process, an unauthorized user may easily obtain personal data of the user.

For an electronic device at home, re-authentication is mainly used to prevent an unauthorized user from using it. For example, after detecting that a surrounding environment in which the electronic device is located changes, the electronic device starts re-authentication. Because the unauthorized user cannot learn some information in a previous authentication process, the unauthorized user cannot complete re-authentication, and therefore cannot obtain user information stored in the electronic device.

Currently, a manner for determining whether the electronic device needs to be re-authenticated is basically determining a location of the electronic device by using a global positioning system (global positioning system, GPS) chip installed on the electronic device or an internet protocol (internet protocol, IP) address of a public network to which the electronic device is connected, and determining, based on whether the location of the electronic device changes, whether the electronic device needs to be re-authenticated. However, a use condition of this manner is strict, a requirement on the electronic device is high, and this manner cannot be used in some scenarios. Consequently, efficiency of determining whether the electronic device needs to be re-authenticated is low, personal information in the electronic device still has a risk of leakage, and user experience is poor.

US 2015/288688 A1 describes a bio leash for user authentication.

US 2016/205094 A1 describes a mobile device to provide continuous and discrete user authentication.

US 2016/373422 A1 describes a user identity based on location patterns of non-associated devices.

### SUMMARY

This application provides a method for determining whether an electronic device needs to be re-authenticated and an electronic device, to improve accuracy of determining whether an electronic device needs to be re-authenticated, avoid an unnecessary re-authentication procedure, save resources, and improve user experience.

The present invention is defined by the subject-matter of the independent claims. Additional features of the invention are presented in the dependent claims.

According to a first aspect, a method for determining whether an electronic device needs to be re-authenticated is provided, where the method includes: An electronic device scans and stores a wireless signal generated by a device in a surrounding environment; the electronic device determines, based on a wireless signal obtained during first n times of scanning, an occurrence probability of each wireless signal during the first n times of scanning, where n is an integer greater than 1; the electronic device determines, based on a wireless signal obtained during an $(n+1)^{th}$ time of scanning and the occurrence probability of each wireless signal during the first n times of scanning, a confidence level of the wireless signal obtained during the $(n+1)^{th}$ time of scanning; and the electronic device determines, based on the confidence level of the wireless signal obtained during the $(n+1)^{th}$ time of scanning, whether the electronic device needs to be re-authenticated.

According to the method for determining whether an electronic device needs to be re-authenticated provided in the first aspect, after an electronic device having a wireless communication capability is activated for a first time, the electronic device scans a surrounding wireless signal (for example, a Wi-Fi signal, a Bluetooth signal, an NFC signal, or a Zigbee signal), and stores information of the wireless signal. Subsequently, the electronic device periodically scans a surrounding wireless signal, or the electronic device scans a surrounding wireless signal each time the electronic device is started. A statistical analysis is performed on wireless signals previously obtained by the electronic device during a plurality of times of scanning, to determine a value of an occurrence probability of each wireless signal (or each device) in the plurality of times of scanning. After scanning is performed currently, a value of an occurrence probability of a wireless signal currently obtained through scanning and the value of the occurrence probability of each wireless signal that is obtained through statistics collection are compared for calculation, to determine a confidence level of the wireless signal currently obtained through scanning. When the confidence level is greater than or equal to a preset threshold, that the electronic device does not need to initiate a re-authentication procedure is determined. If the confidence level is less than the preset threshold, it is considered that an environment in which the electronic device is currently located is untrusted, and only after re-authentication is performed, sensitive information in the electronic device can be accessed or the electronic device is used to control another smart home device, thereby improving accuracy of determining whether the electronic device needs to be re-authenticated, avoiding an unnecessary re-authentication procedure, saving resources, and improving user experience.

For example, the electronic device may be an electronic device related to user privacy, such as a smart television, a smart screen, a smart sound box, a smart light, a smart air conditioner, a printer, a smartphone, a smart headset, a tablet computer, a wearable electronic device (such as a smart watch, a smart band, a smart ring, or smart glasses) with a wireless communication function, or a laptop computer (Laptop).

In a possible implementation of the first aspect, that an electronic device scans and stores a wireless signal generated by a device in a surrounding environment includes: The electronic device stores a plurality of wireless signals obtained during a $j^{th}$ time of scanning, where the plurality of wireless signals obtained during the $j^{th}$ time of scanning include a first wireless signal generated by a first device; and the electronic device performs a $(j+1)^{th}$ time of scanning, where a plurality of wireless signals obtained during the $(j+1)^{th}$ time of scanning do not include the first wireless signal, where in a storage record corresponding to the wireless signal obtained during the $(j+1)^{th}$ time of scanning, a status value corresponding to the first wireless signal is 0.

For example, that an electronic device is obtained through scanning may be understood as that a wireless signal generated by the electronic device is obtained through scanning, or that a wireless signal generated by an electronic device is obtained through scanning may be understood as that the electronic device is obtained through scanning. A status value of an electronic device may also be understood as a status value of a wireless signal generated by the electronic device. When the electronic device is obtained through scanning, the status value of the electronic device is 1. When the electronic device is not obtained, the status value of the electronic device is 0.

For example, the electronic device may record and store the plurality of wireless signals that exist in the surrounding environment in a table manner, or the electronic device may record and store the plurality of wireless signals that exist in the surrounding environment in a set manner. An element in a set represents a status value of the electronic device during one time of scanning.

For example, the electronic device may compare and store, in a table, the wireless signals that exist in the surrounding environment during a plurality of times of scanning, or the electronic device may record and store a set of a plurality of wireless signals that exist in the surrounding environment during a next time of scanning, and compare and store the set based on a set stored last time.

For example, that an electronic device is obtained through scanning may be understood as that a wireless signal generated by the electronic device is obtained through scanning, and a status value of the electronic device may also be understood as a status value of a wireless signal generated by an electronic device 1. When the electronic device is obtained through scanning, the status value of the electronic device is 1. When the electronic device is not obtained, the status value of the electronic device is 0.

In a possible implementation of the first aspect, the method further includes: The electronic device determines an occurrence probability of an $i^{th}$ wireless signal during the first n times of scanning according to the following formula:

$$K_i = \frac{\sum_{j=1}^{n} S_j(D_{iv})}{n}$$

$K_i$ represents a value of the occurrence probability of the $i^{th}$ wireless signal generated by a device $D_i$ in a process from a first time of scanning to an $n^{th}$ time of scanning, $S_j(D_{iv})$ represents a status value corresponding to the device $D_i$ during the $j^{th}$ time of scanning, and j represents a quantity of scanning times; and when the $i^{th}$ wireless signal is obtained during the $j^{th}$ time of scanning, a value of $S_j(D_{iv})$ is 1; or when the $i^{th}$ wireless signal is not obtained during the $j^{th}$ time of scanning, a value of $S_j(D_{iv})$ is 0.

In a possible implementation of the first aspect, a lower limit of a value of j is m, a wireless signal generated by the device $D_i$ is obtained for a first time during an $m^{th}$ time of scanning, and m is a positive integer less than n.

In a possible implementation of the first aspect, that the electronic device determines, based on a wireless signal obtained during an $(n+1)^{th}$ time of scanning and the occurrence probability of each wireless signal during the first n times of scanning, a confidence level of the wireless signal obtained during the $(n+1)^{th}$ time of scanning includes: The electronic device determines the confidence level of the wireless signal obtained during the $(n+1)^{th}$ time of scanning according to the following formula:

$$P_{n+1} = \frac{\sum\limits_{i=1}^{q} \left( K_i \times S_{n+1}(D_{iv}) \right)}{\sum\limits_{i=1}^{q} K_i}$$

$S_{n+1}(D_{iv})$ represents a status value of the device $D_i$ obtained during the $(n+1)^{th}$ time of scanning; when the $i^{th}$ wireless signal is obtained during the $(n+1)^{th}$ time of scanning, a value of $S_{n+1}(D_{iv})$ is 1, or when the $i^{th}$ wireless signal is not obtained during the $(n+1)^{th}$ time of scanning, a value of $S_{n+1}(D_{iv})$ is 0; and q represents a total quantity of devices that appear in the process from the first time of scanning to the $n^{th}$ time of scanning.

In a possible implementation of the first aspect, a time point of the $(n+1)^{th}$ time of scanning belongs to a first time period, and that an electronic device scans and stores a wireless signal generated by a device in a surrounding environment includes: The electronic device scans and stores the wireless signal generated by the device in the surrounding environment, and stores a time point corresponding to each time of scanning; and that the electronic device determines, based on a wireless signal obtained during first n times of scanning, an occurrence probability of each wireless signal during the first n times of scanning includes: The electronic device determines the occurrence probability of each wireless signal during the first n times of scanning in the first time period based on the wireless signal obtained during the first n times of scanning and the time point corresponding to each time of scanning.

For example, time may be divided based on a unit of hour, and a day is divided into 24 time periods (the day is represented in a 24-hour system). A time period from 00:00 to 01:00 is a first time period, a time period from 01:00 to 02:00 is a second time period, and so on. A time period from 23:00 to 00:00 of the next day is the last time period (a $24^{th}$ time period). A time period to which scanning belongs is a time period within which the scanning falls.

For example, it is assumed that a time point for performing the $(n+1)^{th}$ time of scanning is within a time range between a $t^{th}$ hour and a $(t+1)^{th}$ hour of a day (including a moment of the $t^{th}$ hour, and excluding a moment of the $(t+1)^{th}$ hour). For example, a time range between a second hour and a third hour is from 02:00 a.m. (including 02:00 a.m.) to 02:59:59 a.m., which belongs to the $(t+1)^{th}$ time period.

In a possible implementation of the first aspect, the electronic device determines the occurrence probability of each wireless signal obtained during the first n times of scanning in the first time period according to the following formula:

$$K_{i,t} = \frac{\sum\limits_{j=1}^{n} \left[ S_j(D_{iv}) \times F(S_j)_t \right]}{\sum\limits_{j=1}^{n} F(S_j)_t}$$

$K_{i,t}$ represents a value of an occurrence probability in the first time period of the $i^{th}$ wireless signal generated by the device $D_i$ in the process from the first time of scanning to the $n^{th}$ time of scanning, and $S_j(D_{iv})$ represents a corresponding status value of the device $D_i$ during the $j^{th}$ time of scanning; when the $i^{th}$ wireless signal is obtained during the $j^{th}$ time of scanning, a value of $S_j(D_{iv})$ is 1, or when the $i^{th}$ wireless signal is not obtained during the $j^{th}$ time of scanning, a value of $S_j(D_{iv})$ is 0; and j represents a quantity of scanning times, $F(S_j)_t$ represents a time status value corresponding to the $j^{th}$ time of scanning, and if a time point of the $j^{th}$ time of scanning is within the first time period, a value of $F(S_j)_t$ is 1, or if a time point of the $j^{th}$ time of scanning is not within the first time period, a value of $F(S_j)_t$ is 0.

In a possible implementation of the first aspect, that the electronic device determines, based on the confidence level of the wireless signal obtained during the $(n+1)^{th}$ time of scanning, whether the electronic device needs to be re-authenticated includes: when a confidence level of a result of the $(n+1)^{th}$ time of scanning is greater than or equal to a preset threshold, determining that the electronic device does not need to be re-authenticated; or when a confidence level of a result of the $(n+1)^{th}$ time of scanning is less than the preset threshold, determining that the electronic device needs to be re-authenticated.

For example, the preset threshold may be fixed (predefined or preconfigured), or may be dynamically changed through calculation. For example, in a case in which sufficient scanning is performed, the preset threshold may be an average value of confidence levels obtained through recent scanning.

In a possible implementation of the first aspect, the wireless signal generated by the device in the surrounding environment of the electronic device includes: any one of a Wi-Fi signal, a Bluetooth signal, an NFC signal, and a Zigbee signal.

According to a second aspect, an electronic device according to claim 10 is provided.

According to a third aspect, a computer program product is provided. The computer program product includes a computer program. When the computer program is executed by a processor, the computer program is used to perform the method in the first aspect or any one of the possible implementations of the first aspect.

According to a fourth aspect, a computer-readable storage medium is provided. The computer-readable storage medium stores a computer program. When the computer program is executed, the computer program is used to perform the method in the first aspect or any one of the possible implementations of the first aspect.

According to a fifth aspect, a chip according to claim 12 is provided.

According to the method for determining whether an electronic device needs to be re-authenticated provided in this application, whether a surrounding environment is trusted may be determined based on a change of a wireless signal around the electronic device, and the change of the surrounding wireless signal may be dynamically learned. To be specific, statistical analysis is performed on a wireless signal previously obtained by the electronic device during a plurality of times of scanning, to determine a value of an occurrence probability of each wireless signal, determine, by using the probability value and a wireless signal currently obtained through scanning, a confidence level of the wireless signal currently obtained through scanning, and determine, by using the confidence level, whether an environment in which the electronic device is currently located is trusted, thereby improving accuracy of determining whether the electronic device needs to be re-authenticated, avoiding an unnecessary re-authentication procedure, saving resources, and improving user experience.

## BRIEF DESCRIPTION OF DRAWINGS

FIG. 1 is a schematic diagram of an example of a communication system applicable to an embodiment of this application according to this application;

FIG. 2 is a schematic flowchart of an example of a method for determining whether an electronic device needs to be re-authenticated according to an embodiment of this application;

FIG. 3 is a schematic diagram of an example of a scanning range of an electronic device according to an embodiment of this application;

FIG. 4 is a schematic block diagram of an example of a structure of a hub device according to an embodiment of this application; and

FIG. 5 is a schematic block diagram of an example of a structure of a communication apparatus according to an embodiment of this application.

## DESCRIPTION OF EMBODIMENTS

The following describes the technical solutions in embodiments of this application with reference to the accompanying drawings in embodiments of this application.

In descriptions of embodiments of this application, unless otherwise specified, "/" means "or". For example, A/B may represent A or B. In this specification. "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, "a plurality of" means two or more unless otherwise specified.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disc, a floppy disc, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, a key drive, or the like). In addition, various storage media described in this specification may represent one or more devices and/or other machine-readable media that are configured to store information. The term "machine-readable media" may include but is not limited to a radio channel, and various other media that can store, contain and/or carry an instruction and/or data.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disc, a floppy disc, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, a key drive, or the like). In addition, various storage media described in this specification may represent one or more devices and/or other machine-readable media that are configured to store information. The term "machine-readable media" may include but is not limited to a radio channel, and various other media that can store, contain and/or carry an instruction and/or data.

Smart home includes many electronic devices, such as a smart television (for example, Huawei Vision), a smart sound box, a smart light, and a smart air conditioner. These electronic devices may store personal information, personal privacy, or the like of a user. For example, some pictures, personal identity information, personal account information, and the like of the user may be stored in the Huawei Vision. The user does not want the information to be obtained by others. However, after the electronic device is damaged or stolen, the information of the user may be stolen by an unauthorized user. For example, when the smart television or the smart sound box is stolen, another person may obtain the personal information. For another example, usually, a damaged smart television may be returned for repair or sold as a waste. In this process, an unauthorized user may easily obtain personal data of the user.

Currently, re-authentication is mainly used to prevent an unauthorized user from using. For example, after detecting that a surrounding environment (for example, a location changes) in which an electronic device is located changes, the electronic device starts re-authentication. Because an unauthorized user cannot learn some information in a previous authentication process, the unauthorized user cannot complete re-authentication, and therefore cannot obtain user information stored in the electronic device.

Currently, a manner for determining whether the electronic device needs to be re-authenticated is basically a manner of using a GPS or a public IP address. Specifically, locating is performed based on a GSP chip installed on the electronic device by using the GSP chip, to determine whether a location of the electronic device changes. After determining, by using the GSP chip, that the location of the electronic device changes, the electronic device automatically triggers a re-authentication procedure. Alternatively, the location of the electronic device is determined by using an IP address of a public network to which the electronic device is connected, and after determining, by using the connected public IP address, that the location of the electronic device changes, the electronic device automatically triggers a re-authentication procedure. However, in this manner, a GPS chip needs to be installed on the electronic device or the electronic device needs to be connected to a public network. In some scenarios, the electronic device may not be installed with a GPS chip, or in other scenarios, the electronic device may not be connected to a public network at all. As a result, use of this manner is limited, a requirement on the electronic device is high, and the manner cannot be used in some scenarios. Consequently, efficiency of determining whether the electronic device needs to be re-authenticated is low, personal information in the electronic device still has a risk of leakage, and user experience is poor.

Currently, there is another manner for determining whether the electronic device needs to be re-authenticated. The electronic device may periodically scan surrounding Wi-Fi signals. When a change between a Wi-Fi signal obtained through scanning and a Wi-Fi signal obtained during first authorization (or during first authentication) exceeds a specific degree, it is considered that the electronic device needs to be re-authenticated. For example, when a difference between a quantity of Wi-Fi signals obtained through scanning and a quantity of Wi-Fi signals obtained during first authorization exceeds a threshold, or when a quantity of Wi-Fi signals that are different from the Wi-Fi signals obtained during first authorization and that are in the Wi-Fi signals obtained through scanning exceeds a threshold, or when a difference between a signal strength of a Wi-Fi signal that is the same as the Wi-Fi signal obtained during first authorization and that is in the Wi-Fi signals obtained through scanning and a signal strength of the Wi-Fi signal obtained during first authorization exceeds a threshold, that the electronic device needs to be re-authenticated is determined. However, in this manner, the electronic device does not update a status of the Wi-Fi signal obtained during first authorization (or first authentication) in real time, that is, the status of the Wi-Fi signal remains unchanged during first authorization (or first authentication). When comparison is performed each time after scanning, a status of a comparison reference (that is, the Wi-Fi signal obtained during first authorization (or first authentication)) is the same. Currently, there are many mobile electronic devices in home, such as a smartphone, and some smart home devices are gradually added. For example, when most electronic devices in the home are smartphones, if all family members carry their own mobile phones out, an electronic device (for example, a large-screen device) in the home determines that re-authentication is required by comparing a Wi-Fi signal currently obtained through scanning with a Wi-Fi signal obtained during first authorization. Alternatively, when new smart home devices are gradually added to the home, Wi-Fi signals in the home gradually increases. An electronic device (for example, a large-screen device or a smartphone) that previously exists in the home compares a Wi-Fi signal currently obtained through scanning with a Wi-Fi signal obtained during first authorization, and may determine that re-authentication is required. However, actually, re-authentication is not required. Consequently, a redundant re-authentication procedure is caused, resources are wasted, and user experience is poor.

In view of this, this application provides a method for determining whether an electronic device needs to be re-authenticated. After an electronic device having a wireless communication capability is activated for a first time, the electronic device scans a surrounding wireless signal (for example, a Wi-Fi signal, a Bluetooth signal, an NFC signal, or a Zigbee signal), and stores information of the wireless signal. Subsequently, the electronic device periodically scans a surrounding wireless signal, or the electronic device scans a surrounding wireless signal each time the electronic device is started. A statistical analysis is performed on wireless signals previously obtained by the electronic device during a plurality of times of scanning, to determine a value of an occurrence probability of each wireless signal (or each device) in the plurality of times of scanning. After scanning is performed currently, a wireless signal currently obtained through scanning and the value of the occurrence probability of each wireless signal that is obtained through statistics collection are compared for calculation, to determine a confidence level of the wireless signal currently obtained through scanning. When the confidence level is greater than or equal to a preset threshold, that the electronic device does not need to initiate a re-authentication procedure is determined. If the confidence level is less than the preset threshold, it is considered that an environment in which the electronic device is currently located is untrusted, and only after re-authentication is performed, sensitive information in the electronic device can be accessed, or the electronic device is used to control another smart home device, thereby improving accuracy of determining whether the electronic device needs to be re-authenticated, avoiding an unnecessary re-authentication procedure, saving resources, and improving user experience.

The following describes, with reference to a specific example, a method for determining whether an electronic device needs to be re-authenticated provided in this application.

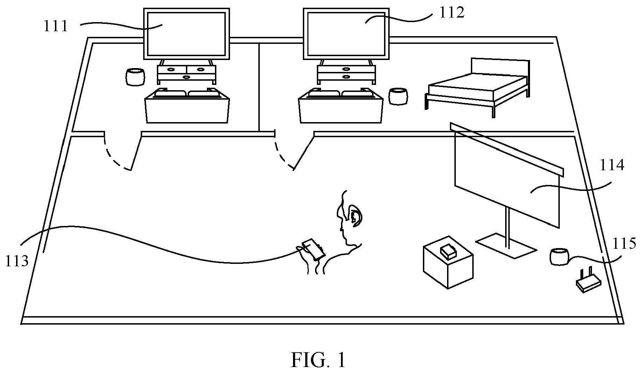

FIG. 1 is a schematic diagram of an example of an application scenario applicable to an embodiment of this application. As shown in FIG. 1, the application scenario includes a smart television 111, a smart screen 112, a smartphone 113, a large-screen device 114, a smart sound box 115, and the like. The smart television 111, the smart screen 112, the smartphone 113, the large-screen device 114, and the smart sound box 115 support a scanning function for one or more of a Wi-Fi signal, a Bluetooth signal, an NFC signal, or the like. In other words, the smart television 111, the smart screen 112, the smartphone 113, the large-screen device 114, and the smart sound box 115 each have one or more of a Wi-Fi module, a Bluetooth module, an NFC module, or the like.

It should be understood that FIG. 1 is merely an example, and should not impose any limitation on an application scenario of this application. For example, in the scenario shown in FIG. 1, more home devices may be further included. This is not limited in this application.

It should be further understood that, in this embodiment of this application, Bluetooth includes Bluetooth low energy (bluetooth low energy, BLE) and classic Bluetooth, and the classic Bluetooth includes at least one of two types of Bluetooth: Bluetooth basic rate (bluetooth basic rate, BR) and Bluetooth enhanced data rate (bluetooth enhanced data rate, EDR).

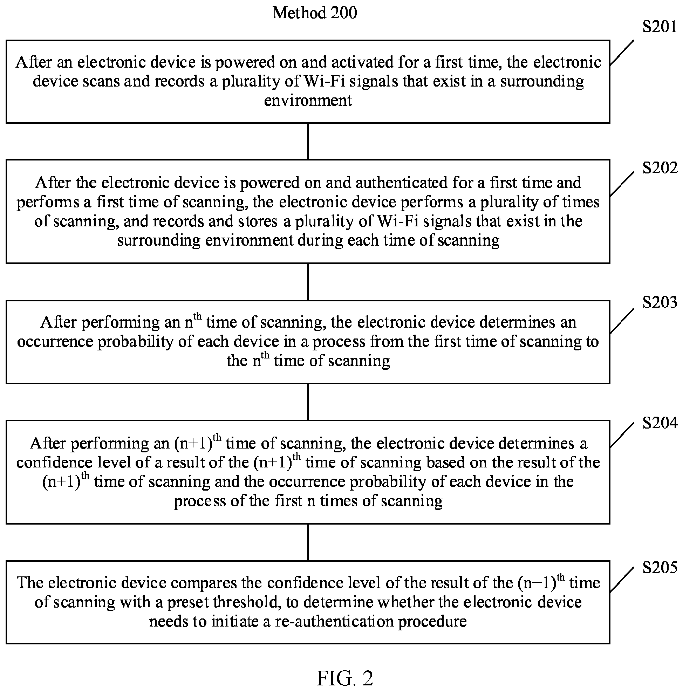

FIG. 2 is a schematic flowchart of an example of a method 200 for determining whether an electronic device needs to be re-authenticated in the scenario shown in FIG. 1 according to this application. As shown in FIG. 2, the method 200 includes S201 to S205.

S201: After an electronic device is powered on and activated for a first time, the electronic device scans and records a plurality of Wi-Fi signals that exist in a surrounding environment.

Specifically, in S201, after the electronic device (for example, the smartphone 114 in FIG. 1) is powered on and activated for the first time, a user uses the electronic device to scan a plurality of Wi-Fi signals that exist in the surrounding environment. After scanning the plurality of Wi-Fi signals that exist in the surrounding environment, the electronic device may record these Wi-Fi signals, and further record an electronic device corresponding to the Wi-Fi signal. In this embodiment of this application, the electronic device may record a media access control (media access control, MAC) address of the Wi-Fi signal obtained through scanning, and uniquely identify a device by using the MAC of the Wi-Fi signal obtained through scanning.

Optionally, in this embodiment of this application, $S_1$ represents a first time of scanning, $S_2$ represents a first time of scanning, and $S_n$ represents an $n^{th}$ time of scanning. $S_1(D_1)$ represents an electronic device 1 (represented by $D_1$) obtained during the first time of scanning, and $S_1(D_{1v})$ represents a status value of the electronic device 1 during the first time of scanning. When $D_1$ is obtained through scanning, a value of $S_1(D_{1v})$ is 1; or when $D_1$ is not obtained, a value of $S_1(D_{1v})$ is 0. A recording rule of another electronic device obtained during the first time of scanning is similar.

In this embodiment of this application, that an electronic device is obtained through scanning may be understood as that a Wi-Fi signal generated by the electronic device is obtained through scanning, and the two expressions may be interchanged. A status value of the electronic device may also be understood as a status value of the Wi-Fi signal generated by the electronic device, and the two expressions may be interchanged.

For example, the surrounding environment of the electronic device includes the smart television 111 (represented by $D_1$), the smart screen 112 (represented by $D_2$), the large-screen device 114 (represented by $D_3$), and the smart sound box 115 (represented by $D_4$). Each of the smart television 111, the smart screen 112, the large-screen device 114, and the smart sound box 115 has a Wi-Fi module, and can generate a Wi-Fi signal. The electronic device also has a Wi-Fi module, and can scan a Wi-Fi signal generated by another device. It is assumed that the electronic device scans $D_1$ to $D_4$ during the first time of scanning. In this case, the electronic device may record and store a plurality of Wi-Fi signals that exist in the surrounding environment.

Optionally, in a possible implementation, the electronic device may record and store the plurality of Wi-Fi signals that exist in the surrounding environment in a table manner. For example, Table 1 shows an example of a list of the plurality of Wi-Fi signals that are recorded and stored by the electronic device and that exist in the surrounding environment during the first time of scanning.

**Table 1: List of the plurality of Wi-Fi signals that are recorded and stored by the electronic device and that exist in the surrounding environment during the first time of scanning**

| Device obtained during the first time of scanning | Status value corresponding to the obtained device | MAC address of a Wi-Fi signal |
|---|---|---|
| $S_1(D_1)$ | $S_1(D_{1v})=1$ | $S_1$-$D_1$-MAC |
| $S_1(D_2)$ | $S_1(D_{2v})=1$ | $S_1$-$D_2$-MAC |
| $S_1(D_3)$ | $S_1(D_{3v})=1$ | $S_1$-$D_3$-MAC |
| $S_1(D_4)$ | $S_1(D_{4v})=1$ | $S_1$-$D_3$-MAC |

Optionally, in another possible implementation, the electronic device may record and store the plurality of Wi-Fi signals that exist in the surrounding environment during the first time of scanning in a set manner.

For example, if a set $S_1$ represents a set of electronic devices obtained during the first time of scanning, the set $S_1$ is $\{S_1(D_{1v}), S_1(D_{2v}), S_1(D_{3v}), S_1(D_{4v})\}$.

It should be understood that the foregoing is merely an example, and should not limit a manner in which the electronic device records and stores the plurality of Wi-Fi signals that exist in the surrounding environment in this embodiment of this application. In this embodiment of this application, the electronic device may further record and store, in another manner, the plurality of Wi-Fi signals obtained through scanning. This is not limited herein in this embodiment of this application.

S202: After the electronic device is powered on and authenticated for a first time and performs a first time of scanning, the electronic device performs a plurality of times of scanning, and records and stores a plurality of Wi-Fi signals that exist in the surrounding environment during each time of scanning.

Optionally, in this embodiment of this application, after the electronic device is powered on and authenticated for the first time and performs the first time of scanning, the electronic device may perform periodic scanning at an interval length T. Alternatively, each time after the electronic device is powered on, the electronic device may automatically scan a plurality of Wi-Fi signals that exist in the surrounding environment, and record and store a plurality of Wi-Fi signals that exist in the surrounding environment during each time of scanning.

For example, after performing a second time of scanning, the electronic device records and stores a plurality of Wi-Fi signals that exist in the surrounding environment during the second time of scanning. It is assumed that when the electronic device performs the second time of scanning, no Wi-Fi signal generated by the device $D_2$ is obtained through scanning, but a Wi-Fi signal generated by a new device $D_5$ is obtained through scanning.

Optionally, in this embodiment of this application, the electronic device records and stores, based on Table 1, a list of the plurality of Wi-Fi signals that exist in the surrounding environment during the second time of scanning, that is, the electronic device may perform, in one table, comparison and storage on the list of the plurality of Wi-Fi signals and the list of the plurality of Wi-Fi signals that exist in the surrounding environment during the first time of scanning, as shown in Table 2.

**Table 2: List of the plurality of Wi-Fi signals that are recorded and stored by the electronic device and that exist in the surrounding environment during the second time of scanning**

| Device obtained during the first time of scanning | Status value corresponding to the obtained device | Device obtained during the second time of scanning | Status value corresponding to the obtained device |
|---|---|---|---|
| $S_1(D_1)$ | $S_1(D_{1v})=1$ | $S_2(D_1)$ | $S_2(D_{1v})=1$ |
| $S_1(D_2)$ | $S_1(D_{2v})=0$ | | $S_2(D_{2v})=0$ |
| $S_1(D_3)$ | $S_1(D_{3v})=1$ | $S_2(D_3)$ | $S_2(D_{3v})=1$ |
| $S_1(D_4)$ | $S_1(D_{4v})=1$ | $S_2(D_4)$ | $S_2(D_{4v})=1$ |
| | | $S_2(D_5)$ | $S_2(D_{5v})=1$ |

Optionally, in another possible implementation, the electronic device may record and store, based on $S_1$, the plurality of Wi-Fi signals that exist in the surrounding environment during the second time of scanning in a set manner, that is, store the plurality of Wi-Fi signals after comparing the plurality of Wi-Fi signals with the set of the plurality of Wi-Fi signals that exist in the surrounding environment during the first time of scanning.

For example, if a set $S_2$ represents a set of electronic devices obtained during the second time of scanning, the set $S_2$ is $\{S_2(D_{1v}), S_2(D_{2v}), S_2(D_{3v}), S_2(D_{4v}), S_2(D_{5v})\}$. A value of $S_2(D_{2v})$ is 0.

Correspondingly, a manner of recording and storing a plurality of Wi-Fi signals that exist in the surrounding environment during the $n^{th}$ time of scanning may be the foregoing table manner or the foregoing set manner.

S203: After performing the $n^{th}$ time of scanning, the electronic device determines an occurrence probability of each device in a process from the first time of scanning to the $n^{th}$ time of scanning.

In S203, $K_i$ represents an occurrence probability of the device $D_i$ in the process from the first time of scanning to the $n^{th}$ time of scanning, and the occurrence probability of the device $D_i$ may also be understood as an occurrence probability of the Wi-Fi signal generated by the device $D_i$. $K_i$ may be obtained through calculation by using a formula (1).

$$K_i = \frac{\sum_{j=1}^{n} S_j(D_{iv})}{n} \quad (1)$$

In the formula (1), $S_j(D_{iv})$ represents a status value corresponding to the device $D_i$ during a $j^{th}$ time of scanning, j represents a quantity of scanning times, and a value of j ranges from 1 to n. A value of $S_j(D_{iv})$ may be obtained based on a record corresponding to each time of scanning.

For example, it is assumed that n is equal to 2. With reference to the examples shown in Table 1 and Table 2, the occurrence probability of the electronic device $D_1$ in the process from the first time of scanning to the second time of scanning is calculated by using the foregoing formula (1). A calculation formula is shown in a formula (2).

$$K_1 = \frac{\sum_{j=1}^{2} S_i(D_{1v})}{2} = \frac{1+1}{2} = 1 \quad (2)$$

According to the formula (2), it may be calculated that the occurrence probability K of the electronic device $D_1$ in the process from the first time of scanning to the second time of scanning is 1.

It should be understood that, in this embodiment of this application, for the electronic device $D_5$, because $D_5$ is not obtained during the first time of scanning, a value of $S_1(D_{5v})$ corresponding to the electronic device $D_5$ during the first time of scanning is 0.

Optionally, in S203, in another possible implementation, to improve calculation precision, when $K_i$ is calculated, a calculation range may be adjusted based on a first occurrence time of the device $D_i$. For example, it is assumed that the device $D_i$ is obtained for a first time during a $100^{th}$ time of scanning, and appears continuously in each time of subsequent scanning. In this case, the value of j in the formula (1) may be limited. The value of j is a quantity of scanning times when the device $D_i$ is obtained for the first time to n, that is, a lower limit of the value of j is the quantity of scanning times when the device $D_i$ is obtained for the first time. In this case, the occurrence probability of the device $D_i$ during the first time of scanning to the $n^{th}$ time of scanning may be calculated by using a formula (3).

$$K_i = \frac{\sum_{j=m}^{n} S_j(D_{iv})}{n} \quad (3)$$

In the formula (3), $S_j(D_{iv})$ represents the status value corresponding to the device $D_i$ during the $j^{th}$ time of scanning, j represents the quantity of scanning times, the value of j ranges from m to n, m is the quantity of scanning times when the device $D_i$ is obtained for the first time, a value of $S_j(D_{iv})$ may be obtained based on a record corresponding to each time of scanning, and both m and n are positive integers.

S204: After performing an $(n+1)^{th}$ time of scanning, the electronic device determines a confidence level of a result of the $(n+1)^{th}$ time of scanning based on the result of the $(n+1)^{th}$ time of scanning and the occurrence probability of each device in the process of the first n times of scanning.

In S204, $S_{n+1}(D_{iv})$ represents a status value of the device $D_i$ obtained during the $(n+1)^{th}$ time of scanning. For example, if $D_i$ is obtained during the $(n+1)^{th}$ time of scanning, a value of $S_{n+1}(D_{iv})$ is 1; or if $D_i$ is not obtained, a value of $S_{n+1}(D_{iv})$ is 0. Therefore, the confidence level $P_{n+1}$ of the result of the $(n+1)^{th}$ time of scanning may be calculated by using a formula (4).

$$P_{n+1} = \frac{\sum_{i=1}^{q}(K_i \times S_{n+1}(D_{iv}))}{\sum_{i=1}^{q} K_i} \quad (4)$$

In the formula (4), $P_{n+1}$ represents the confidence level of the result of the $(n+1)^{th}$ time of scanning, $K_i$ represents the occurrence probability of the device $D_i$ in the process from the first time of scanning to the $n^{th}$ time of scanning, and q represents a total quantity of devices that appear in the process from the first time of scanning to the $n^{th}$ time of scanning (a total quantity of devices obtained through statistics collection in the process from the first time of scanning to the $n^{th}$ time of scanning).

For example, assuming that $K_1$=0.3, $K_2$=0.4, $K_3$=0.3, $K_4$=0.7, a value of q is 4, $S_{n+1}(D_{1v})$=0, $S_{n+1}(D_{2v})$=1, $S_{n+1}(D_{3v})$=1, and $S_{n+1}(D_{4v})$=1, a value of the confidence level of the result of the $(n+1)^{th}$ time of scanning may be calculated by using a formula (5).

$$P_5 = \frac{\sum_{i=1}^{4}(K_i \times S_5(D_{iv}))}{\sum_{i=1}^{4} K_i} = \frac{(0.3 \times 0) + (0.4 \times 1) + (0.3 \times 1) + (0.7 \times 1)}{0.3 + 0.4 + 0.3 + 0.7} = 0.82 \quad (5)$$

The confidence level of the result of the $(n+1)^{th}$ time of scanning that is obtained through calculation by using the formula (5) is 0.82.

S205: Compare the confidence level of the result of the $(n+1)^{th}$ time of scanning with a preset threshold (represented by R), to determine whether the electronic device needs to initiate a re-authentication procedure.

In S205, the preset threshold may be fixed (predefined or preconfigured), or may be dynamically changed through calculation. For example, in a case in which sufficient scanning is performed, R may be an average value of confidence levels obtained through recent scanning. If the confidence level of the result of the $(n+1)^{th}$ time of scanning is greater than or equal to the preset threshold R, that the electronic device does not need to initiate the re-authentication procedure is determined. If the confidence level of the result of the $(n+1)^{th}$ time of scanning is less than the preset threshold R, that the electronic device needs to initiate the re-authentication procedure is determined.

Optionally, in this embodiment of this application, in addition to recording whether a plurality of Wi-Fi signals exist in the surrounding environment during each time of scanning to indicate a status of the device, a time point for scanning a Wi-Fi signal each time may be further recorded to further improve calculation precision. For example, in S201 and S202, $S_j$ (T) represents a time point of the $j^{th}$ time of scanning, and $S_j$(T) may be used to analyze an occurrence rule of a device based on a time characteristic. For example, a portable device (for example, a mobile phone) generally does not appear in daytime of a working day, but a sound box device in home is online all day.

After the time point $S_j$(T) of the $j^{th}$ time of scanning is recorded, in S203, a time characteristic needs to be considered when $K_i$ is calculated. For example, time may be divided based on a unit of hour, and a day is divided into 24 time periods (the day is represented in a 24-hour system). A time period from 00:00 to 01:00 is a first time period, a time period from 01:00 to 02:00 is a second time period, and so on. A time period from 23:00 to 00:00 of the next day is the last time period (a $24^{th}$ time period). A time period to which scanning belongs is a time period within which the scanning falls.

In S205, it is assumed that a time point for performing the $(n+1)^{th}$ time of scanning is within a time range between a $t^{th}$ hour and a $(t+1)^{th}$ hour of a day (including a moment of the $t^{th}$ hour, and excluding a moment of the $(t+1)^{th}$ hour). For example, a time range between a second hour and a third hour is from 02:00 a.m. (including 02:00 a.m.) to 02:59:59 a.m., which belongs to a $(t+1)^{th}$ time period. Optionally, in this embodiment of this application, $F(S_j)_t$ represents a time status value of the $j^{th}$ time of scanning. If the time point of the $j^{th}$ time of scanning belongs to the time range between the $t^{th}$ hour and the $(t+1)^{th}$ hour of the day, a value of $F(S_j)_t$ is 1; or if the time point of the $j^{th}$ time of scanning does not belong to the time range between the $t^{th}$ hour and the $(t+1)^{th}$ hour of the day, a value of $F(S_j)_t$ is 0. A maximum value of j is n. In this case, in S203, an occurrence probability of the device $D_i$ in the time range between the $t^{th}$ hour and the $(t+1)^{th}$ hour in the process from the first time of scanning to the $n^{th}$ time of scanning may be calculated by using a formula (6).

$$K_{i,t} = \frac{\sum_{j=1}^{n} \left[ S_j(D_{iv}) \times F(S_j)_t \right]}{\sum_{j=1}^{n} F(S_j)_t} \quad (6)$$

In the formula (6), $K_{i,t}$ represents the occurrence probability of the device $D_i$ in the time range between the $t^{th}$ hour and the $(t+1)^{th}$ hour of the day in the process from the first time of scanning to the $n^{th}$ time of scanning, $S_j(D_{iv})$ represents the status value corresponding to the device $D_i$ in the $j^{th}$ time of scanning, j represents the quantity of scanning times, the value of j ranges from 1 to n, and $F(S_j)_t$ represents a time status value during the $j^{th}$ time of scanning. If the time point of the $j^{th}$ time of scanning belongs to the time range between the $t^{th}$ hour and the $(t+1)^{th}$ hour of the day, a value of $F(S_j)_t$ is 1; or if the time point of the $j^{th}$ time of scanning does not belong to the time range between the $t^{th}$ hour and the $(t+1)^{th}$ hour of the day, a value of $F(S_j)_t$ is 0.

For example, if n is equal to 4 and the $t^{th}$ hour is a time range between a third hour and a fourth hour, the $t^{th}$ hour belongs to a fourth time period. For example, if a time point when the device $D_1$ is obtained through scanning for the first time is between the first hour and the second hour, the value of $F(S_1)_t$ is 0, and the value of $S_1(D_{1v})$ is 1. If a time point when the device $D_1$ is obtained through scanning for a second time is between the third hour and the fourth hour, the value of $F(S_2)_t$ is 1, and the value of $S_2(D_{1v})$ is 1. If a time point when the device $D_1$ is obtained through scanning for a third time is also between the third hour and the fourth hour, the value of $F(S_3)_t$ is 1, and the value of $S_3(D_{1v})$ is 1. If a time point of a fourth time of scanning is also between the third hour and the fourth hour, the value of $F(S_3)_t$ is 1. However, if the device $D_1$ is not obtained in the fourth time of scanning, the value of $S_4(D_{1v})$ is 0. Therefore, according to the formula (6), it may be calculated that the occurrence probability of the device $D_1$ in the time range between the $t^{th}$ hour and the $(t+1)^{th}$ hour of the day during the first time of scanning to the $n^{th}$ time of scanning is 0.66.

After $K_{i,t}$ is calculated, the confidence level of the result of the $(n+1)^{th}$ time of scanning may be calculated. In S204, when the time point of the $(n+1)^{th}$ time of scanning is within the time range between the $t^{th}$ hour and the $(t+1)^{th}$ hour, the confidence level $P_{n+1}$ of the result of the $(n+1)^{th}$ time of scanning may be calculated by using a formula (7).

$$P_{n+1} = \frac{\sum_{i=1}^{q} (K_{i,t} \times S_{n+1}(D_{iv}))}{\sum_{i=1}^{q} K_{i,t}} \quad (7)$$

In the formula (7), $P_{n+1}$ represents the confidence level of the result of the $(n+1)^{th}$ time of scanning, q represents the total quantity of devices that appear in the process from the first time of scanning to the $n^{th}$ time of scanning, and $S_{n+1}(D_{iv})$ represents the status value of the device $D_i$ obtained during the $(n+1)^{th}$ time of scanning. When $D_i$ is obtained during the $(n+1)^{th}$ time of scanning, a value of $S_{n+1}(D_{iv})$ is 1; or when $D_i$ is not obtained, a value of $S_{n+1}(D_{iv})$ is 0.

Optionally, in this embodiment of this application, when a time of scanning is divided, a week may be divided into seven time periods, and a time length of each time period is one day (24 hours) for statistical analysis. Alternatively, the state value corresponding to the device may be not only 1 or 0, which indicates that the device exists or does not exist. Further, the status value corresponding to the device may be alternatively determined by using a value of a Wi-Fi signal strength corresponding to the device. In this way, representation may be more detailed, and calculation precision is improved.

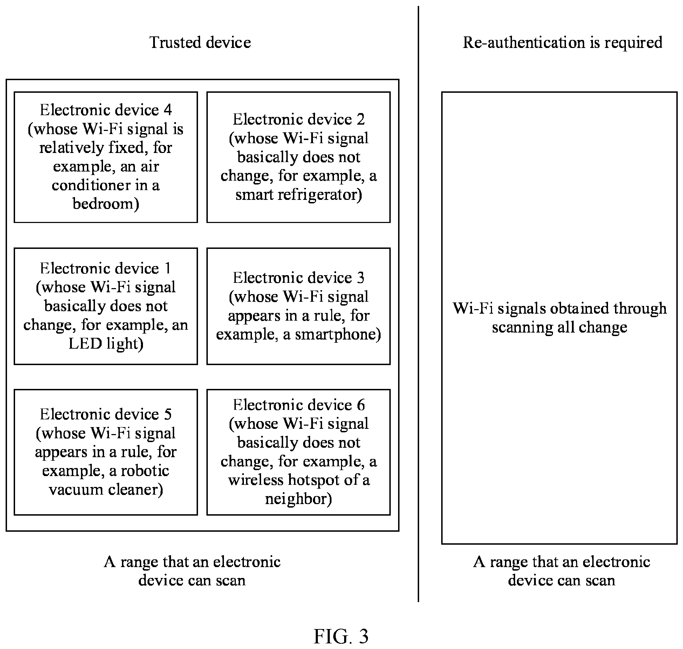

For example, FIG. 3 is a schematic diagram of an example in which an electronic device determines, by analyzing a Wi-Fi signal obtained through scanning, whether the electronic device needs to be re-authenticated according to this application. In FIG. 3, a trusted range that can be scanned by the electronic device at a time includes Wi-Fi signals generated by trusted electronic devices 1 to 6. A Wi-Fi signal of the electronic device 1 always appears and a strength basically does not change. For example, the electronic device 1 may be an LED light. A Wi-Fi signal of the electronic device 2 also always appears and a strength basically does not change. For example, the electronic device 1 may be a smart refrigerator. A Wi-Fi signal of the electronic device 3 appears according to a rule (for example, appears only at night). For example, the electronic device 3 may be a smartphone. A Wi-Fi signal of the electronic device 4 also always appears and a strength basically does not change. For example, the electronic device 4 may be an air conditioner in a bedroom. A Wi-Fi signal of the electronic device 5 appears according to a rule (for example, appears only at a specific time in daytime). For example, the electronic device 5 may be a robot vacuum cleaner. A Wi-Fi signal of the electronic device 6 always appears and a strength basically does not change. For example, the electronic device 6 may be a wireless hotspot of a neighbor.

As shown in FIG. 3, after the electronic device performs Wi-Fi signal scanning next time, if all Wi-Fi signals obtained through scanning change, for example, no Wi-Fi signal generated by an electronic device is obtained through scanning, or a rule of a Wi-Fi signal generated by an electronic device is different from a previous rule (for example, a time point at which the Wi-Fi signal appears is different, a signal strength is different, or the like), that the electronic device needs to initiate a re-authentication procedure is determined.

The foregoing uses scanning a Wi-Fi signal as an example to describe the method for determining whether an electronic device needs to be re-authenticated according to this application. However, embodiments of this application should not be limited. For example, according to the method provided in this embodiment of this application, a scenario or an embodiment in which an electronic device scans a wireless signal such as a Bluetooth signal, an NFC signal, or a Zigbee signal may be further used. This is not limited in this embodiment of this application.

According to the method for determining whether an electronic device needs to be re-authenticated provided in this application, whether a surrounding environment is trusted may be determined based on a change of a wireless signal around the electronic device, and the change of the surrounding wireless signal may be dynamically learned. To be specific, statistical analysis is performed on wireless signals previously obtained by the electronic device during a plurality of times of scanning, to determine a value of an occurrence probability of each wireless signal, determine, by using the probability value and a wireless signal currently obtained through scanning, a confidence level of the wireless signal currently obtained through scanning, and determine, by using the confidence level, whether an environment in which the electronic device is currently located is trusted, thereby improving accuracy of determining whether the electronic device needs to be re-authenticated, avoiding an unnecessary re-authentication procedure, saving resources, and improving user experience.

It should be further understood that the foregoing descriptions are merely intended to help a person skilled in the art better understand embodiments of this application, but are not intended to limit the scope of embodiments of this application. Apparently, a person skilled in the art may make various equivalent modifications or changes based on the foregoing examples. For example, some steps in the foregoing method 200 may be unnecessary, or some steps may be newly added. Alternatively, any two or more of the foregoing embodiments are combined. A modified, changed, or combined solution also falls within the scope of embodiments of this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are differentiated merely for ease of description, but are not used to limit the scope of embodiments of this application. The sequence numbers of the foregoing processes do not mean execution sequences. The execution sequences of the processes should be determined according to functions and internal logic of the processes, and should not be construed as any limitation on the implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

It should be further understood that in embodiments of this application, "predefinition" may be implemented by pre-storing corresponding code or a corresponding table in a device or in another manner that can be used to indicate related information. A specific implementation of "predefinition" is not limited in this application.

With reference to FIG. 1 to FIG. 3, the foregoing describes embodiments of the method for determining whether an electronic device needs to be re-authenticated according to embodiments of this application. The following describes a related device provided in embodiments of this application.

In this embodiment, the electronic device may be divided into functional modules according to the foregoing method. For example, each functional module may be obtained through division based on a corresponding function, or two or more functions may be integrated into one processing module. The integrated module may be implemented in a form of hardware. It should be noted that, in this embodiment, division into modules is an example and is merely logical function division. During actual implementation, there may be another division manner.

It should be noted that related content of all steps in the foregoing method embodiments may be cited in function description of corresponding functional modules. Details are not described herein again.

The electronic device provided in this embodiment of this application is configured to perform the foregoing method for determining whether an electronic device needs to be re-authenticated, and therefore can achieve a same effect as that of the foregoing implementation method. When an integrated unit is used, the electronic device may include a processing module, a storage module, and a communication module. The processing module may be configured to: control and manage an action of the electronic device. For example, the processing module may be configured to support the electronic device in performing steps performed by a processing unit. The storage module may be configured to support in storing program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of digital signal processing (digital signal processing, DSP) and a microprocessor. The storage module may be a memory. The communication module may be specifically a device, for example, a radio frequency circuit, a Bluetooth chip, a Wi-Fi chip, or the like that interacts with another electronic device.

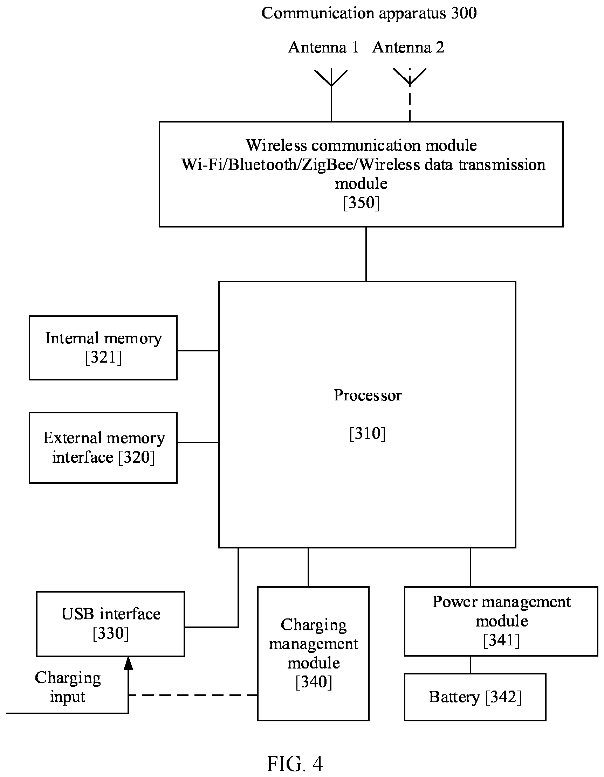

For example, FIG. 4 is a schematic diagram of a hardware structure of an example of a communication apparatus 300 according to this application. The communication apparatus 300 may be the foregoing electronic device. As shown in FIG. 4, the communication apparatus 300 may include a processor 310, an external memory interface 320, an internal memory 321, a universal serial bus (universal serial bus, USB) interface 330, a charging management module 340, a power management module 341, a battery 342, an antenna 1, an antenna 2, a wireless communication module 350, and the like.

It may be understood that a structure shown in this embodiment of this application does not constitute a specific limitation on the communication apparatus 300. In some other embodiments of this application, the communication apparatus 300 may include more or fewer components than those shown in the figure, or some components may be combined, or some components may be split, or there may be a different component layout. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the communication apparatus 300 may alternatively include one or more processors 310. The controller may generate an operation control signal based on instruction operation code and a time sequence signal, to complete control of instruction reading and instruction execution.

In some embodiments, the processor 310 may include one or more interfaces. The interface may include an inter-integrated circuit (inter-integrated circuit, I2C) interface, an integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 330 is an interface that conforms to a USB standard specification, and may be specifically a mini USB interface, a micro USB interface, a USB Type-C interface, or the like. The USB interface 2530 may be configured to connect to a charger for charging the communication apparatus 300, or may be configured to transmit data between the communication apparatus 300 and a peripheral device.

It may be understood that, an interface connection relationship between the modules shown in this embodiment of this application is merely an example for description, and does not constitute a limitation on the structure of the communication apparatus 300. In some other embodiments of this application, the communication apparatus 300 may alternatively use an interface connection manner different from an interface connection manner in this embodiment, or a combination of a plurality of interface connection manners.

A wireless communication function of the communication apparatus 300 may be implemented by using the antenna 1, the antenna 2, the wireless communication module 350, and the like.

The wireless communication module 350 may provide a wireless communication solution that is applied to the communication apparatus 300 and that includes Wi-Fi (including Wi-Fi awareness and Wi-Fi AP), Bluetooth (bluetooth, BT), a wireless data transmission module (for example, 433 MHz, 868 MHz, and 315 MHz), and the like. The wireless communication module 350 may be one or more components integrating at least one communication processing module. The wireless communication module 350 receives an electromagnetic wave through the antenna 1 or the antenna 2 (or the antenna 1 and the antenna 2), performs frequency modulation and filtering processing on an electromagnetic wave signal, and sends a processed signal to the processor 310. The wireless communication module 350 may further receive a to-be-sent signal from the processor 310, perform frequency modulation and amplification on the signal, and convert the signal into an electromagnetic wave for radiation through the antenna 1 or the antenna 2.

The external memory interface 320 may be configured to connect to an external memory card, for example, a micro SD card, to extend a storage capability of the communication apparatus 300. The external memory card communicates with the processor 310 through the external memory interface 320, to implement a data storage function. For example, a music file or a video file is stored in the external memory card.

The internal memory 321 may be configured to store one or more computer programs, and the one or more computer programs include instructions. The processor 310 may run the instructions stored in the internal memory 321, so that the communication apparatus 300 performs the method for determining whether an electronic device needs to be re-authenticated provided in some embodiments of this application, various applications, data processing, and the like. The internal memory 321 may include a code storage area and a data storage area. The code storage area may store an operating system. The data storage area may store data created during use of the communication apparatus 300, and the like. In addition, the internal memory 321 may include a high-speed random access memory, and may further include a non-volatile memory, such as one or more disc storage components, a flash component, or a universal flash storage (universal flash storage, UFS). In some embodiments, the processor 310 can run the instructions stored in the internal memory 321 and/or the instructions stored in the memory disposed in the processor 310, so that the communication apparatus 300 performs the method for determining whether an electronic device needs to be re-authenticated provided in embodiments of this application, various applications, and data processing.

The communication apparatus 300 includes, for example, a wireless router, a smart television, a large-screen device, a smart air conditioner, a mobile phone, a tablet computer, a notebook computer, a large-screen television, a smart home appliance, a PDA, a POS, an in-vehicle computer, a camera, a cordless phone, a PDA, a notebook computer, or a printer. This is not limited in this embodiment of this application.

It should be understood that, for a specific process of performing the foregoing corresponding steps by the communication apparatus 300, refer to related descriptions of the steps performed by the electronic device in the foregoing embodiment with reference to FIG. 2. For brevity, details are not described herein again.

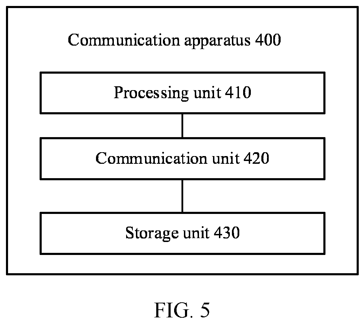

FIG. 5 is a schematic block diagram of another example of a communication apparatus 400 according to an embodiment of this application. The communication apparatus 400 may correspond to the electronic device described in embodiments of the method 200. Alternatively, the communication apparatus 400 may be a chip or a component applied to an electronic device. In addition, modules or units of the communication apparatus 400 are separately configured to perform actions or processing processes performed by the electronic device described in the embodiments of the method 200. As shown in FIG. 5, the communication apparatus 400 may include a processing unit 410 and a communication unit 420. Optionally, the communication apparatus 400 may further include a storage unit 430.

It should be understood that, for a specific process of performing the foregoing corresponding steps by the units in the communication apparatus 400, refer to related descriptions of the steps performed by the electronic device with reference to FIG. 2. For brevity, details are not described herein again.

Optionally, the communication unit 420 may include a receiving unit (module) and a sending unit (module), configured to perform the steps of receiving information and sending information by the electronic device in the foregoing method embodiments. The storage unit 430 is configured to store instructions executed by the processing unit 410 and the communication unit 420. The processing unit 410, the communication unit 420, and the storage unit 430 are in communication connection. The storage unit 430 stores instructions. The processing unit 410 is configured to execute the instructions stored in the storage unit. The communication unit 420 is configured to send or receive a specific signal under driving of the processing unit 410.

It should be understood that the communication unit 420 may be a transceiver, an input/output interface, an interface circuit, or the like, for example, may be implemented by the wireless communication module 350 in the embodiment shown in FIG. 4. The storage unit may be a memory, for example, may be implemented by the external memory interface 320 and the internal memory 321 in the embodiment shown in FIG. 4. The processing unit 410 may be implemented by the processor 310 in the embodiment shown in FIG. 4, or may be implemented by the processor 310, the external memory interface 320, and the internal memory 321.

It should be further understood that the communication apparatus 400 shown in FIG. 5 may be an electronic device, or an electronic device may include the communication apparatus 400 shown in FIG. 5.

It should be further understood that division of units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing method, for example, one or more application specific integrated circuits (application specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

An embodiment of this application further provides a computer-readable storage medium, configured to store computer program code. The computer program includes instructions used to perform any method for determining whether an electronic device needs to be re-authenticated provided in the foregoing embodiments of this application. The readable medium may be a read-only memory (read-only memory, ROM) or a random access memory (random access memory, RAM). This is not limited in this embodiment of this application.

This application further provides a computer program product, where the computer program product includes instructions, and when the instructions are executed, the electronic device performs a corresponding operation in the foregoing method.

An embodiment of this application further provides a chip located in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any method for determining whether an electronic device needs to be re-authenticated provided in the foregoing embodiments of this application.

The computer instructions are stored in a storage unit.

The storage unit is a storage unit inside the chip, such as a register or a cache. Any processor mentioned above may be a CPU, a microprocessor, an ASIC, or one or more integrated circuits used to control program execution of the feedback information transmission method.

The communication apparatus, the computer-readable storage medium, the computer program product, or the chip provided in embodiments is configured to perform a corresponding method provided above. Therefore, for beneficial effects that can be achieved by the communication apparatus, the computer storage medium, the computer program product, or the chip, refer to beneficial effects of the corresponding method provided above. Details are not described herein again.

It may be understood that the memory in this embodiment of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

All or some of the methods in embodiments of this application may be implemented by software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, or another programmable apparatus. The computer programs or the instructions may be stored in the computer-readable storage medium, or may be transmitted through the computer-readable storage medium. The computer-readable storage medium may be any usable medium accessible by a computer, or a data storage device such as a server integrating one or more usable media.

A person skilled in the art may clearly understand that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a readable storage medium, and includes several instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disc, a ROM, a RAM, a magnetic disc, or an optical disc.

The foregoing descriptions are merely specific implementations of this application, but are not intended to limit the protection scope of this application. Therefore, the protection scope of this application shall be subject to the protection scope of the claims.

**Claims**

1. A method for determining whether an electronic device needs to be re-authenticated, wherein the method comprises:

   scanning and storing (S201), by an electronic device, a wireless signal generated by a device in a surrounding environment; **characterized by**
   determining (S202), by the electronic device based on a wireless signal obtained during first n times of scanning, an occurrence probability of each wireless signal during the first n times of scanning, wherein n is an integer greater than 1;
   determining (S203), by the electronic device based on a wireless signal obtained during an (n+1)$^{th}$ time of scanning and the occurrence probability of each wireless signal during the first n times of scanning, a confidence level of the wireless signal obtained during the (n+1)$^{th}$ time of scanning; and
   determining (S204), by the electronic device based on the confidence level of the wireless signal obtained during the (n+1)$^{th}$ time of scanning, whether the electronic device needs to be re-authenticated.

2. The method according to claim 1, wherein the scanning and storing, by an electronic device, a wireless signal generated by a device in a surrounding environment comprises:

   storing, by the electronic device, a plurality of wireless signals obtained during a j$^{th}$ time of scanning, wherein the plurality of wireless signals obtained during the j$^{th}$ time of scanning comprise a first wireless signal generated by a first device; and
   performing, by the electronic device, a (j+1)$^{th}$ time of scanning, wherein a plurality of wireless signals obtained during the (j+1)$^{th}$ time of scanning do not comprise the first wireless signal, wherein
   in a storage record corresponding to the wireless signals obtained during the (j+1)$^{th}$ time of scanning, a status value corresponding to the first wireless signal is 0.

3. The method according to claim 1 or 2, wherein the method further comprises: determining, by the electronic device, an occurrence probability of an i$^{th}$ wireless signal during the first n times of scanning according to the following formula:

$$K_i = \frac{\sum_{j=1}^{n} S_j(D_{iv})}{n},$$

wherein

$K_i$ represents a value of an occurrence probability of the $i^{th}$ wireless signal generated by a device $D_i$ in a process from a first time of scanning to an $n^{th}$ time of scanning, $S_j(D_{iv})$ represents a status value corresponding to the device $D_i$ during the $j^{th}$ time of scanning, and j represents a quantity of scanning times; and when the $i^{th}$ wireless signal is obtained during the $j^{th}$ time of scanning, a value of $S_j(D_{iv})$ is 1, or when the $i^{th}$ wireless signal is not obtained during the $j^{th}$ time of scanning, a value of $S_j(D_{iv})$ is 0.

4. The method according to claim 3, wherein a lower limit of a value of j is m, a wireless signal generated by the device $D_i$ is obtained for a first time during an $m^{th}$ time of scanning, and m is a positive integer less than n.

5. The method according to claim 3 or 4, wherein the determining, by the electronic device based on a wireless signal obtained during an $(n+1)^{th}$ time of scanning and the occurrence probability of each wireless signal during the first n times of scanning, a confidence level of the wireless signal obtained during the $(n+1)^{th}$ time of scanning comprises: determining, by the electronic device, the confidence level of the wireless signal obtained during the $(n+1)^{th}$ time of scanning according to the following formula:

$$P_{n+1} = \frac{\sum_{i=1}^{q} (K_i \times S_{n+1}(D_{iv}))}{\sum_{i=1}^{q} K_i},$$

wherein

$S_{n+1}(D_{iv})$ represents a status value of the device $D_i$ obtained during the $(n+1)^{th}$ time of scanning; when the $i^{th}$ wireless signal is obtained during the $(n+1)^{th}$ time of scanning, a value of $S_{n+1}(D_{iv})$ is 1, or when the $i^{th}$ wireless signal is not obtained during the $(n+1)^{th}$ time of scanning. a value of $S_{n+1}(D_{iv})$ is 0; and q represents a total quantity of devices that appear in the process from the first time of scanning to the $n^{th}$ time of scanning.

6. The method according to any one of claims 1 to 5. wherein a time point of the $(n+1)^{th}$ time of scanning belongs to a first time period, and the scanning and storing, by an electronic device, a wireless signal generated by a device in a surrounding environment comprises:

scanning and storing, by the electronic device, the wireless signal generated by the device in the surrounding environment, and storing a time point corresponding to each time of scanning; and
the determining, by the electronic device based on a wireless signal obtained during first n times of scanning, an occurrence probability of each wireless signal during the first n times of scanning comprises:
determining, by the electronic device, the occurrence probability of each wireless signal during the first n times of scanning in the first time period based on the wireless signal obtained during the first n times of scanning and the time point corresponding to each time of scanning.

7. The method according to claim 6, wherein the electronic device determines the occurrence probability of each wireless signal during the first n times of scanning in the first time period according to the following formula:

$$K_{i,t} = \frac{\sum_{j=1}^{n} \left[ S_j(D_{iv}) \times F(S_j)_t \right]}{\sum_{j=1}^{n} F(S_j)_t},$$

wherein

$K_{i,t}$ represents a value of an occurrence probability in the first time period of the $i^{th}$ wireless signal generated by the device $D_i$ in the process from the first time of scanning to the $n^{th}$ time of scanning, and $S_j(D_{iv})$ represents a corresponding status value of the device $D_i$ during the $j^{th}$ time of scanning; when the $i^{th}$ wireless signal is obtained during the $j^{th}$ time of scanning, a value of $S_j(D_{iv})$ is 1, or when the $i^{th}$ wireless signal is not obtained during the $j^{th}$ time of scanning, a value of $S_j(D_{iv})$ is 0; j represents the quantity of scanning times, and $F(S_j)_t$ represents a time status value corresponding to the $j^{th}$ time of scanning; and if a time point of the $j^{th}$ time of scanning is within the first time period, a value of $F(S_j)_t$ is 1, or if a time point of the j<sup>th</sup> time of scanning is not within the first time period, a value of $F(S_j)_t$ is 0.

8. The method according to any one of claims 1 to 7, wherein the determining, by the electronic device based on the confidence level of the wireless signal obtained during the (n+1)<sup>th</sup> time of scanning, whether the electronic device needs to be re-authenticated comprises:

when a confidence level of a result of the (n+1)<sup>th</sup> time of scanning is greater than or equal to a preset threshold, determining that the electronic device does not need to be re-authenticated; or
when a confidence level of a result of the (n+1)<sup>th</sup> time of scanning is less than the preset threshold, determining that the electronic device needs to be re-authenticated.

9. The method according to any one of claims 1 to 8, wherein the wireless signal generated by the device in the surrounding environment comprises:
any one of a Wi-Fi signal, a Bluetooth signal, an NFC signal, and a Zigbee signal.

10. An electronic device, comprising a processor and a memory, wherein the processor is coupled to the memory, the memory stores program instructions, and when the program instructions stored in the memory are executed by the processor, the method according to any one of claims 1 to 9 is performed.

11. A computer-readable storage medium, wherein the computer-readable storage medium stores a computer program, the computer program comprises program instructions, and when the program instructions are executed by a processor, the processor is enabled to perform the method according to any one of claims 1 to 9.

12. A chip for a communication device, the chip comprising a processor and a memory the chip configured to invoke a computer program from the memory and run the computer program, so that the communication device on which the chip is installable performs the method according to any one of claims 1 to 9.


**Patentansprüche**

1. Verfahren zum Bestimmen, ob eine elektronische Vorrichtung neuauthentifiziert werden muss, wobei das Verfahren Folgendes umfasst:

Scannen und Speichern (S201) eines durch eine Vorrichtung in einer Umgebung erzeugten drahtlosen Signals durch eine elektronische Vorrichtung; **gekennzeichnet durch**
Bestimmen (S202) einer Auftrittswahrscheinlichkeit jedes drahtlosen Signals während erster n Scanvorgänge durch die elektronische Vorrichtung basierend auf einem drahtlosen Signal, das während der ersten n Scanvorgänge erlangt wurde, wobei n eine Ganzzahl größer als 1 ist;
Bestimmen (S203) eines Konfidenzniveaus des drahtlosen Signals, das während des (n+1)-ten Scanvorgangs erlangt wird, durch die elektronische Vorrichtung basierend auf einem drahtlosen Signal, das während eines (n+1)-ten Scanvorgangs erlangt wird, und der Auftrittswahrscheinlichkeit jedes drahtlosen Signals während der ersten n Scanvorgänge; und
Bestimmen (S204), durch die elektronische Vorrichtung basierend auf dem Konfidenzniveau des drahtlosen Signals, das während des (n+1)-ten Scanvorgangs erlangt wird, ob die elektronische Vorrichtung neuauthentifiziert werden muss.

2. Verfahren nach Anspruch 1, wobei das Scannen und Speichern eines durch eine Vorrichtung in einer Umgebung erzeugten drahtlosen Signals durch eine elektronische Vorrichtung Folgendes umfasst:

Speichern einer Vielzahl von drahtlosen Signalen, die während eines j-ten Scanvorgangs erlangt werden, durch die elektronische Vorrichtung, wobei die Vielzahl der drahtlosen Signale, die während des j-ten Scanvorgangs erlangt werden, ein erstes durch eine erste Vorrichtung erzeugtes drahtloses Signal umfasst; und
Durchführen eines (j+1)-ten Scanvorgangs durch die elektronische Vorrichtung, wobei eine Vielzahl von drahtlosen Signalen, die während des (j+1)-ten Scanvorgangs erlangt werden, nicht das erste drahtlose Signal umfasst, wobei
in einem Speicherdatensatz entsprechend den drahtlosen Signalen, die während des (j+1)-ten Scanvorgangs erlangt werden, ein Statuswert entsprechend dem ersten drahtlosen Signal 0 ist.

**3.** Verfahren nach Anspruch 1 oder 2, wobei das Verfahren ferner Folgendes umfasst: Bestimmen einer Auftrittswahrscheinlichkeit eines i-ten drahtlosen Signals während der ersten n Scanvorgänge durch die elektronische Vorrichtung gemäß der folgenden Formel:

$$K_i = \frac{\sum_{j=1}^{n} S_j(D_{iv})}{n},$$

wobei

$K_i$ einen Wert einer Auftrittswahrscheinlichkeit des i-ten drahtlosen Signals darstellt, das durch eine Vorrichtung $D_i$ in einem Prozess von einem ersten Scanvorgang bis zu einem n-ten Scanvorgang erzeugt wird, $S_j(D_{iv})$ einen Statuswert entsprechend der Vorrichtung $D_i$ während des j-ten Scanvorgangs darstellt und j eine Anzahl von Scanvorgängen darstellt; und wenn das i-te drahtlose Signal während des j-ten Scanvorgangs erlangt wird, ein Wert von $S_j(D_{iv})$ 1 ist, oder, wenn das i-te drahtlose Signal während des j-ten Scanvorgangs nicht empfangen wird, ein Wert von $S_j(D_{iv})$ 0 ist.

**4.** Verfahren nach Anspruch 3, wobei eine Untergrenze eines Werts von j m ist, ein drahtloses Signal, das durch die Vorrichtung $D_i$ erzeugt wird, erstmals während eines m-ten Scanvorgangs empfangen wird und m eine positive Ganzzahl kleiner als n ist.

**5.** Verfahren nach Anspruch 3 oder 4, wobei das Bestimmen eines Konfidenzniveaus des drahtlosen Signals, das während eines (n+1)-ten Scanvorgangs erlangt wird, durch die elektronische Vorrichtung basierend auf einem drahtlosen Signal, das während eines (n+1)-ten Scanvorgangs erlangt wird, und der Auftrittswahrscheinlichkeit jedes drahtlosen Signals während der ersten n Scanvorgänge Folgendes umfasst: Bestimmen des Konfidenzniveaus des drahtlosen Signals, das während des (n+1)-ten Scanvorgangs erlangt wird, durch die elektronische Vorrichtung gemäß der folgenden Formel:

$$P_{n+1} = \frac{\sum_{i=1}^{q} (K_i \times S_{n+1}(D_{iv}))}{\sum_{i=1}^{q} K_i},$$

wobei

$S_{n+1}(D_{iv})$ einen Statuswert der Vorrichtung $D_i$ darstellt, der während des (n+1)-ten Scanvorgangs erlangt wird; wenn das i-te digitale Signal während des (n+1)-ten Scanvorgangs abgerufen wird, der Wert von $S_{n+1}(D_{iv})$ 1 ist, oder, wenn das i-te drahtlose Signal während des (n+1)-ten Scanvorgangs nicht abgerufen wird, der Wert von $S_{n+1}(D_{iv})$ 0 ist; und q die Gesamtanzahl von Vorrichtungen darstellt, die von dem ersten Scanvorgang bis zu dem n-ten Scanvorgang in dem Prozess auftreten.

**6.** Verfahren nach einem der Ansprüche 1 bis 5, wobei ein Zeitpunkt des (n+1)-ten Scanvorgangs zu einem ersten Zeitraum gehört und das Scannen und Speichern eines drahtlosen Signals, das durch eine Vorrichtung in einer Umgebung erzeugt wird, durch eine elektronische Vorrichtung Folgendes umfasst:

Scannen und Speichern des drahtlosen Signals, das durch die Vorrichtung in der Umgebung erzeugt wird, durch die elektronische Vorrichtung und Speichern eines Zeitpunkts entsprechend jedem Scanvorgang; und
das Bestimmen einer Auftrittswahrscheinlichkeit jedes drahtlosen Signals während der ersten n Scanvorgänge durch die elektronische Vorrichtung basierend auf einem während der ersten n Scanvorgänge erlangten drahtlosen Signal Folgendes umfasst:
Bestimmen der Auftrittswahrscheinlichkeit jedes drahtlosen Signals während der ersten n Scanvorgänge in dem ersten Zeitraum durch die elektronische Vorrichtung basierend auf dem während der ersten n Scanvorgänge erlangten drahtlosen Signal und dem Zeitpunkt entsprechend jedem Scanvorgang.

**7.** Verfahren nach Anspruch 6, wobei die elektronische Vorrichtung die Auftrittswahrscheinlichkeit jedes drahtlosen Signals während der ersten n Scanvorgänge in dem ersten Zeitraum gemäß der folgenden Formel bestimmt:

$$K_{i,t} = \frac{\sum_{j=1}^{n}\left[ S_j(D_{iv}) \times F(S_j)_t \right]}{\sum_{j=1}^{n} F(S_j)_t},$$

wobei

$K_{i,t}$ einen Wert einer Auftrittswahrscheinlichkeit in dem ersten Zeitraum des i-ten drahtlosen Signals, das durch die Vorrichtung $D_i$ erzeugt wird, in dem Prozess von dem ersten Scanvorgang bis zu dem n-ten Scanvorgang darstellt, und $S_j(D_{iv})$ einen entsprechenden Statuswert der Vorrichtung $D_i$ während des j-ten Scanvorgangs darstellt; wenn das i-te drahtlose Signal während des j-ten Scanvorgangs erlangt wird, ein Wert von $S_j(D_{iv})$ 1 ist, oder wenn das i-te drahtlose Signal während des j-ten Scanvorgangs nicht erlangt wird, ein Wert von $S_j(D_{iv})$ 0 ist; j die Anzahl von Scanvorgängen darstellt, und $F(S_j)_t$ einen Zeitstatuswert entsprechend dem j-ten Scanvorgang darstellt; und, wenn ein Zeitpunkt des j-ten Scanvorgangs innerhalb des ersten Zeitraums liegt, ein Wert von $F(S_j)_t$ 1 ist, oder, wenn ein Zeitpunkt des j-ten Scanzeitpunkts nicht innerhalb des ersten Zeitraums liegt, ein Wert von $F(S_j)_t$ 0 ist.

8. Verfahren nach einem der Ansprüche 1 bis 7, wobei das Bestimmen durch die elektronische Vorrichtung basierend auf dem Konfidenzniveau des drahtlosen Signals, das während des (n+1)-ten Scanvorgangs erlangt wird, ob die elektronische Vorrichtung neuauthentifiziert werden muss, Folgendes umfasst:

   wenn das Konfidenzniveau eines Ergebnisses des (n+1)-ten Scanvorgangs größer oder gleich einem voreingestellten Schwellenwert ist, Bestimmen, dass die elektronische Vorrichtung nicht neuauthentifiziert werden muss; oder
   wenn ein Konfidenzniveau eines Ergebnisses des (n+1)-ten Scanvorgangs kleiner dem voreingestellten Schwellenwert ist, Bestimmen, dass die elektronische Vorrichtung neuauthentifiziert werden muss.

9. Verfahren nach einem der Ansprüche 1 bis 8, wobei das drahtlose Signal, das durch die Vorrichtung in der Umgebung erzeugt wird, Folgendes umfasst:
   ein beliebiges von einem Wi-Fi-Signal, einem Bluetooth-Signal, einem NFC-Signal und einem Zigbee-Signal.

10. Elektronische Vorrichtung, umfassend einen Prozessor und einen Speicher, wobei der Prozessor mit dem Speicher gekoppelt ist, der Speicher Programmanweisungen speichert, und, wenn die Programmanweisungen, die in dem Speicher gespeichert sind, durch den Prozessor ausgeführt werden, das Verfahren nach einem der Ansprüche 1 bis 9 durchgeführt wird.

11. Computerlesbares Speichermedium, wobei das computerlesbare Speichermedium ein Computerprogramm speichert, das Computerprogramm Programmanweisungen umfasst und, wenn die Programmanweisungen durch einen Prozessor ausgeführt werden, es dem Prozessor ermöglicht wird, das Verfahren nach einem der Ansprüche 1 bis 9 durchzuführen.

12. Chip für eine Kommunikationsvorrichtung, wobei der Chip einen Prozessor und einen Speicher umfasst, der Chip dazu konfiguriert ist, ein Computerprogramm aus dem Speicher abzurufen und das Computerprogramm auszuführen, sodass die Kommunikationsvorrichtung, auf welcher der Chip installierbar ist, das Verfahren nach einem der Ansprüche 1 bis 9 durchführt.

**Revendications**

1. Procédé pour déterminer si un dispositif électronique nécessite une nouvelle authentification, dans lequel le procédé comprend :

   le balayage et le stockage (S201), par un dispositif électronique, d'un signal sans fil généré par un dispositif dans un environnement environnant ; **caractérisé par**
   la détermination (S202), par le dispositif électronique sur la base d'un signal sans fil obtenu pendant les n premiers temps de balayage, d'une probabilité d'occurrence de chaque signal sans fil pendant les n premiers temps de balayage, dans lequel n est un entier supérieur à 1 ;
   la détermination (S203), par le dispositif électronique sur la base d'un signal sans fil obtenu pendant un (n+1)$^{ième}$ temps de balayage et de la probabilité d'occurrence de chaque signal sans fil pendant les n premiers temps de balayage, d'un niveau de confiance du signal sans fil obtenu pendant le (n+1)$^{ième}$ temps de balayage ; et
le fait de déterminer (S204), par le dispositif électronique sur la base du niveau de confiance du signal sans fil obtenu pendant le (n+1)$^{ième}$ temps de balayage, si le dispositif électronique nécessite une nouvelle authentification.

2. Procédé selon la revendication 1, dans lequel le balayage et le stockage, par un dispositif électronique, d'un signal sans fil généré par un dispositif dans un environnement environnant comprennent :

le stockage, par le dispositif électronique, d'une pluralité de signaux sans fil obtenus pendant un j$^{ième}$ temps de balayage, dans lequel la pluralité de signaux sans fil obtenus pendant le j$^{ième}$ temps de balayage comprennent un premier signal sans fil généré par un premier dispositif ; et
la réalisation, par le dispositif électronique, d'un (j+1)$^{ième}$ temps de balayage, dans lequel une pluralité de signaux sans fil obtenus pendant le (j+1)$^{ième}$ temps de balayage ne comprennent pas le premier signal sans fil, dans lequel
dans un enregistrement de stockage correspondant aux signaux sans fil obtenus pendant le (j+1)$^{ième}$ temps de balayage, une valeur d'état correspondant au premier signal sans fil est 0.

3. Procédé selon la revendication 1 ou 2, dans lequel le procédé comprend également : la détermination, par le dispositif électronique, d'une probabilité d'occurrence d'un i$^{ième}$ signal sans fil pendant les n premiers temps de balayage selon la formule suivante :

$$K_i = \frac{\sum_{j=1}^{n} S_j(D_{iv})}{n},$$

dans lequel
$K_i$ représente une valeur d'une probabilité d'occurrence du i$^{ième}$ signal sans fil généré par un dispositif $D_i$ dans un processus allant d'un premier temps de balayage à un n$^{ième}$ temps de balayage, $S_j(D_{iv})$ représente une valeur d'état correspondant au dispositif $D_i$ pendant le j$^{ième}$ temps de balayage, et j représente une quantité de temps de balayage ; et lorsque le i$^{ième}$ signal sans fil est obtenu pendant le j$^{ième}$ temps de balayage, une valeur de $S_j(D_{iv})$ est 1, ou lorsque le i$^{ième}$ signal sans fil n'est pas obtenu pendant le j$^{ième}$ temps de balayage, une valeur de $S_j(D_{iv})$ est 0.

4. Procédé selon la revendication 3, dans lequel une limite inférieure d'une valeur de j est m, un signal sans fil généré par le dispositif $D_i$ est obtenu une première fois pendant un m$^{ième}$ temps de balayage, et m est un entier positif inférieur à n.

5. Procédé selon la revendication 3 ou 4, dans lequel la détermination, par le dispositif électronique, sur la base d'un signal sans fil obtenu pendant un (n+1)$^{ième}$ temps de balayage et de la probabilité d'occurrence de chaque signal sans fil pendant les n premiers temps de balayage, d'un niveau de confiance du signal sans fil obtenu pendant le (n+1)$^{ième}$ temps de balayage comprend : la détermination, par le dispositif électronique, du niveau de confiance du signal sans fil obtenu pendant le (n+1)$^{ième}$ temps de balayage selon la formule suivante :

$$P_{n+1} = \frac{\sum_{i=1}^{q} (K_i \times S_{n+1}(D_{iv}))}{\sum_{i=1}^{q} K_i},$$

dans lequel
$S_{n+1}(D_{iv})$ représente une valeur d'état du dispositif $D_i$ obtenue pendant le (n+1)$^{ième}$ temps de balayage ; lorsque le i$^{ième}$ signal sans fil est obtenu pendant le (n+1)$^{ième}$ temps de balayage, une valeur de $S_{n+1}(D_{iv})$ est 1, ou lorsque le i$^{ième}$ signal sans fil n'est pas obtenu pendant le (n+1)$^{ième}$ temps de balayage, une valeur de $S_{n+1}(D_{iv})$ est 0 ; et q représente une quantité totale de dispositifs qui apparaissent dans le processus depuis le premier temps de balayage jusqu'au n$^{ième}$ temps de balayage.

6. Procédé selon l'une quelconque des revendications 1 à 5, dans lequel un point temporel du (n+1)$^{ième}$ temps de balayage appartient à une première période de temps, et le balayage et le stockage, par un dispositif électronique, d'un signal sans fil généré par un dispositif dans un environnement environnant comprennent :

le balayage et le stockage, par le dispositif électronique, du signal sans fil généré par le dispositif dans l'environnement environnant, et le stockage d'un point temporel correspondant à chaque temps de balayage ; et

la détermination, par le dispositif électronique sur la base d'un signal sans fil obtenu pendant les n premiers temps de balayage, d'une probabilité d'occurrence de chaque signal sans fil pendant les n premiers temps de balayage comprend :

la détermination, par le dispositif électronique, de la probabilité d'occurrence de chaque signal sans fil pendant les n premiers temps de balayage dans la première période de temps sur la base du signal sans fil obtenu pendant les n premiers temps de balayage et du point temporel correspondant à chaque temps de balayage.

7. Procédé selon la revendication 6, dans lequel le dispositif électronique détermine la probabilité d'occurrence de chaque signal sans fil pendant les n premiers temps de balayage de la première période de temps selon la formule suivante :

$$K_{i,t} = \frac{\sum_{j=1}^{n}\left[S_j(D_{iv}) \times F(S_j)_t\right]}{\sum_{j=1}^{n} F(S_j)_t},$$

dans lequel

$K_{i,t}$ représente une valeur d'une probabilité d'occurrence dans la première période de temps du $i^{ème}$ signal sans fil généré par le dispositif $D_i$ dans le processus allant du premier temps de balayage au $n^{ème}$ temps de balayage, et $S_j$ ($D_{iv}$) représente une valeur d'état correspondante du dispositif $D_i$ pendant le $j^{ème}$ temps de balayage ; lorsque le $i^{ème}$ signal sans fil est obtenu pendant le $j^{ème}$ temps de balayage, une valeur de $S_j(D_{iv})$ est 1, ou lorsque le $i^{ème}$ signal sans fil n'est pas obtenu pendant le $j^{ème}$ temps de balayage, une valeur de $S_j(D_{iv})$ est 0 ; j représente la quantité de temps de balayage, et $F(S_j)_t$ représente une valeur d'état temporel correspondant au $j^{ème}$ temps de balayage ; et si un point temporel du $j^{ème}$ temps de balayage est dans la première période de temps, une valeur de $F(S_j)_t$ est 1, ou si un point temporel du $j^{ème}$ temps de balayage n'est pas dans la première période de temps, une valeur de $F(S_j)_t$ est 0.

8. Procédé selon l'une quelconque des revendications 1 à 7, dans lequel le fait de déterminer, par le dispositif électronique sur la base du niveau de confiance du signal sans fil obtenu lors du $(n+1)^{ème}$ temps de balayage, si le dispositif électronique nécessite une nouvelle authentification comprend :

lorsqu'un niveau de confiance d'un résultat du $(n+1)^{ème}$ temps de balayage est supérieur ou égal à un seuil prédéfini, la détermination que le dispositif électronique n'a pas besoin dune nouvelle authentification ; ou lorsque le niveau de confiance d'un résultat du $(n+1)^{ème}$ temps de balayage est inférieur au seuil prédéfini, la détermination que le dispositif électronique nécessite une nouvelle authentification.

9. Procédé selon l'une quelconque des revendications 1 à 8, dans lequel le signal sans fil généré par le dispositif dans l'environnement environnant comprend :
l'un quelconque d'un signal Wi-Fi, d'un signal Bluetooth, d'un signal NFC, et d'un signal Zigbee.

10. Dispositif électronique, comprenant un processeur et une mémoire, dans lequel le processeur est couplé à la mémoire, la mémoire stocke des instructions de programme, et lorsque les instructions de programme stockées dans la mémoire sont exécutées par le processeur, le procédé selon l'une quelconque des revendications 1 à 9 est réalisé.

11. Support de stockage lisible par ordinateur, dans lequel le support de stockage lisible par ordinateur stocke un programme informatique, le programme informatique comprend des instructions de programme, et lorsque les instructions de programme sont exécutées par un processeur, le processeur est activé pour réaliser le procédé selon l'une quelconque des revendications 1 à 9.

12. Puce pour un dispositif de communication, la puce comprenant un processeur et une mémoire, la puce étant configurée pour invoquer un programme informatique à partir de la mémoire et lancer le programme informatique, de sorte que le dispositif de communication sur lequel la puce peut être installée réalise le procédé selon l'une quelconque des revendications 1 à 9.

FIG. 1

Method 200

S201

After an electronic device is powered on and activated for a first time, the electronic device scans and records a plurality of Wi-Fi signals that exist in a surrounding environment

S202

After the electronic device is powered on and authenticated for a first time and performs a first time of scanning, the electronic device performs a plurality of times of scanning, and records and stores a plurality of Wi-Fi signals that exist in the surrounding environment during each time of scanning

S203

After performing an $n^{th}$ time of scanning, the electronic device determines an occurrence probability of each device in a process from the first time of scanning to the $n^{th}$ time of scanning

S204

After performing an $(n+1)^{th}$ time of scanning, the electronic device determines a confidence level of a result of the $(n+1)^{th}$ time of scanning based on the result of the $(n+1)^{th}$ time of scanning and the occurrence probability of each device in the process of the first n times of scanning

S205

The electronic device compares the confidence level of the result of the $(n+1)^{th}$ time of scanning with a preset threshold, to determine whether the electronic device needs to initiate a re-authentication procedure

FIG. 2

Trusted device

Re-authentication is required

| Electronic device 4 (whose Wi-Fi signal is relatively fixed, for example, an air conditioner in a bedroom) | Electronic device 2 (whose Wi-Fi signal basically does not change, for example, a smart refrigerator) |
| --- | --- |
| Electronic device 1 (whose Wi-Fi signal basically does not change, for example, an LED light) | Electronic device 3 (whose Wi-Fi signal appears in a rule, for example, a smartphone) |
| Electronic device 5 (whose Wi-Fi signal appears in a rule, for example, a robotic vacuum cleaner) | Electronic device 6 (whose Wi-Fi signal basically does not change, for example, a wireless hotspot of a neighbor) |

Wi-Fi signals obtained through scanning all change

A range that an electronic device can scan

A range that an electronic device can scan

FIG. 3

Communication apparatus 300

Antenna 1   Antenna 2

Wireless communication module
Wi-Fi/Bluetooth/ZigBee/Wireless data transmission
module
[350]

Internal memory
[321]

External memory
interface [320]

Processor

[310]

USB interface
[330]

Charging
input

Charging
management
module
[340]

Power management
module
[341]

Battery [342]

FIG. 4

Communication apparatus 400

Processing unit 410

Communication unit 420

Storage unit 430

FIG. 5

**EP 4 294 066 B1**

**Patent documents cited in the description**

- US 2015288688 A1
- US 2016205094 A1
- US 2016373422 A1